(19) Europäisches Patentamt
European Patent Office
Office européen des brevets

(11) Veröffentlichungsnummer: **0 283 805**
**A2**

(12) # EUROPÄISCHE PATENTANMELDUNG

(21) Anmeldenummer: **88103408.6**

(22) Anmeldetag: **04.03.88**

(51) Int. Cl.4: **B65D 17/50** , C09J 3/16 , C09J 5/06

(30) Priorität: **27.03.87 DE 3710157**

(43) Veröffentlichungstag der Anmeldung: **28.09.88 Patentblatt 88/39**

(84) Benannte Vertragsstaaten: **AT BE CH DE ES FR GB GR IT LI LU NL SE**

(71) Anmelder: **Schmalbach-Lubeca AG**
**Schmalbachstrasse 1**
**D-3300 Braunschweig(DE)**

(72) Erfinder: **Bolte, Georg, Dr.**
**Klosterhof 15**
**D-3303 Vechelde(DE)**
Erfinder: **Heinecke, Dieter**
**Bockshornweg 3**
**D-3300 Braunschweig(DE)**
Erfinder: **Hexel, Günter**
**Friedrich-Löffler-Weg 60**
**D-3300 Braunschweig(DE)**
Erfinder: **Hinterwaldner, Rudolf**
**Dachsberg 19**
**D-8019 Moosach-Altenburg(DE)**

(74) Vertreter: **Ebbinghaus, Dieter et al**
**Patentanwälte v. Füner, Ebbinghaus, Finck**
**Mariahilfplatz 2 & 3**
**D-8000 München 90(DE)**

(54) **Packmittel mit temperaturbeständig verklebter Lasche, insbesondere einer Aufreisslasche an einem Wandteil eines Behälters, Klebstoff hierfür und Verfahren zum Verkleben der Lasche.**

(57) Gegenstand der Erfindung ist ein Packmittel mit temperaturbeständig verklebter Lasche, insbesondere Aufreißlasche, wobei die Werkstoffe der Lasche und das Packmittel gleich oder verschieden sein können und wobei erfindungsgemäß der Klebverbund durch einen lösungsmittelfreien, thermoplastischen Schmelzklebstoff vermittelt wird. Gegenstand der Erfindung ist ferner ein temperaturbeständiger Klebstoff zur Verwendung zwischen der Lasche und dem Packmittel, sowie ein Verfahren zum Verkleben einer Lasche mit einem Packmittel unter Verwendung dieses speziellen Klebstoffes. Beansprucht wird ferner ein Reaktivieren des Schmelzklebfilms mittels Wärme, Hochfrequenz und/oder Laserstrahlen.

EP 0 283 805 A2

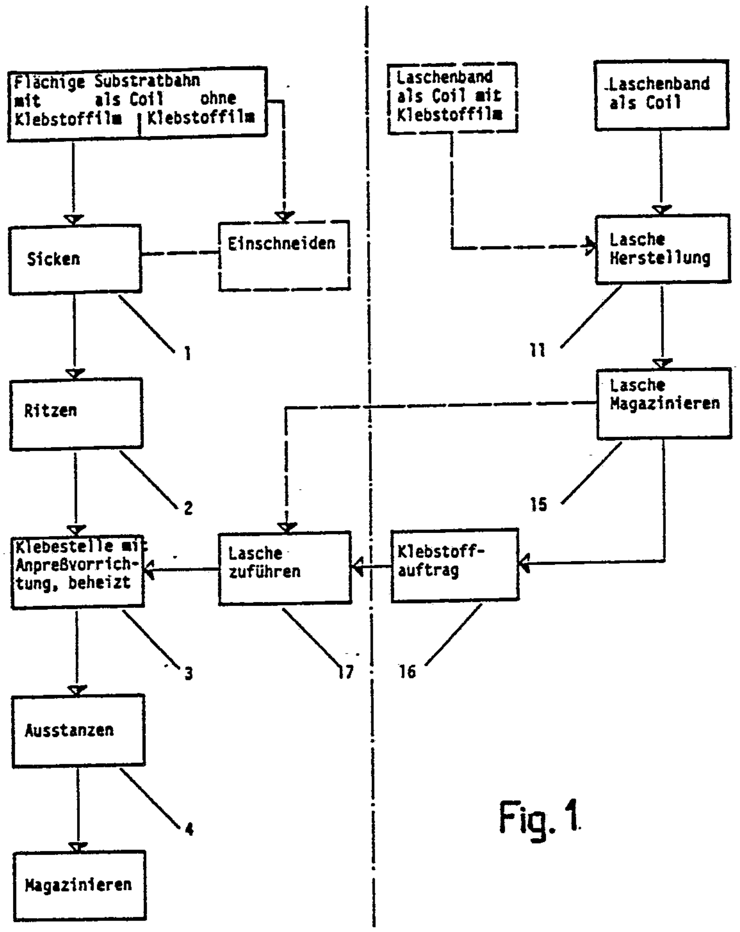

Flächige Substratbahn mit als Coil ohne Klebstoffilm | Klebstoffilm
Sicken
Einschneiden
1
Ritzen
2
Klebestelle mit Anpreßvorrichtung, beheizt
3
Ausstanzen
4
Magazinieren
Laschenband als Coil mit Klebstoffilm
Laschenband als Coil
Lasche Herstellung
11
Lasche Magazinieren
15
Lasche zuführen
Klebstoff-auftrag
17
16


Fig. 1

# PACKMITTEL MIT TEMPERATURBESTÄNDIG VERKLEBTER LASCHE, INSBESONDERE EINER AUFREISS-LASCHE AN EINEM WANDTEIL EINES BEHÄLTERS, KLEBSTOFF HIERFÜR UND VERFAHREN ZUM VERKLEBEN DER LASCHE

Gegenstand der vorliegenden Erfindung ist ein Packmittel mit temperaturbeständig verklebter Lasche, insbesondere einer Aufreißlasche an einem Wandteil eines Behälters. Die Lasche und das Packmittel können aus gleichen oder ungleichen Werkstoffen hergestellt sein.

Gegenstand der Erfindung ist ferner der verwendete Klebstoff. Dieser muß temperaturbeständig sein, d.h. die damit hergestellten Klebverbunde zwischen Lasche und Packmittel sind sterilisationsfest (130 bis 150 °C) und kältebeständig (-40 °C).

Ein weiterer Gegenstand ist das in die Fertigung integrierte Verfahren zum Verkleben einer oder mehrerer Laschen mit einer Packung.

Laschen, insbesondere solche zum Aufreißen von Behältern aus Metall, wie z.B. Getränkedosen, Dosen unterschiedlicher Größe für Nahrungsmittel oder dergleichen, werden nach dem Stand der Technik in der Regel mit Nieten, z.B. Hohlnieten, an einem Wandteil eines Hohlkörpers befestigt. Nachteilig bei dieser Befestigungsart der Laschen ist deren aufwendige und relativ teure Herstellungsweise, die vor allem durch eine Mehrzahl komplizierter Stanzwerkzeuge bestimmt wird. Zusätzlich erfordern die damit verbundenen extremen Substratdeformationen vielfach Nachlackierungen und zusätzliches Abdichten der Nietstellen.

Um diese Nachteile beim mechanischen Befestigen einer Lasche zu beseitigen, hat man sich bemüht, die Lasche an das Packmittel mittels Kleben zu befestigen, wie dies auch in den EP-PS 0 065 417 und EP-PS 0 078 625 beschrieben ist. Insbesondere in der EP-PS 0 078 625 werden leicht zu öffnende Deckel für Behälter beschrieben, wobei die Lasche mit dem zu öffnenden Bereich über einen Verbindungsdrehpunkt in der Form einer Thermoplastharz-Klebschicht verbunden ist. Diese Klebschicht besteht aus einem Copolymeren oder einem Polyamid. Die dafür geeigneten Copolymere sind Copolyester, Copolymere von Vinylester, Ionomere und dergleichen. Um nun eine ausreichende Adhäsion an den Grenzflächen der Klebstelle zu erzielen, müssen die Metalloberflächen vorbehandelt und mit einem Haftprimer versehen werden. Die Oberflächenvorbehandlung und die Haftprimerausrüstungen sind zusätzliche kosten-und zeitaufwendige Arbeitsgänge. Vor allem dann, wenn Haftprimer getrocknet und gegebenenfalls eingebrannt werden müssen, wodurch Substratdeformationen entstehen können. Ein weiterer Nachteil ist mit den lösungsmittelhaltigen Haftprimern gegeben, weil neben einer ex-geschützten Ausrüstung der Beschichtungsanlage Probleme in Arbeitshygiene und -umwelt entstehen. Wenn bei der Haftprimerausrüstung von Coil zu Coil gearbeitet wird, sind lange und teure Trocknungstunnels notwendig, um sie überhaupt noch wirtschaftlich betreiben zu können. Aber ein wesentlicher Nachteil ist in den eingesetzten Rückgratpolymeren der beschriebenen Schmelzklebstoffe begründet. Deshalb können damit - trotz Oberflächenvorbehandlung und Haftprimern - keine hochtemperaturbeständigen Klebverbunde hergestellt werden. Ferner können mit den beschriebenen Schmelzklebstoffarten die oben gesetzten Aufgaben nicht befriedigend gelöst werden, da

- Copolymer des Ethylens mit Vinylester, z.B. Vinylace tat, Acrylsäureester und dergleichen, bereits bei Temperaturen zwischen 60 und 90 °C erweichen und zu kriechen - wegen der relativ niedrigen Erweichungspunkte - beginnen;
- Polyamide auf der Basis von Fettsäuren, z.B. Dilinolsäure und Hexamethylendiamin, bei niedrigen oder mittleren Molekulargewichten trotz ihrer guten Benetzungsfähigkeit - wegen der relativ niederen Kristallschmelzpunkte - nur eine begrenzte thermische Widerstandsfähigkeit besitzen, worunter die hergestellte Klebverbindung während der Lagerung leidet; und bei höheren Molekulargewichten infolge der höheren Schmelzpunkte zwar höhere Wärmestandsfestigkeiten liefern, aber die Verarbeitbarkeit außerordentlich erschwert ist, da Applikationstemperaturen von ≥ +240 °C benötigt werden und nur bei einer begrenzten Anzahl von Substraten eingesetzt werden können;
- Copolyamide aus Monomeren, wie z.B. Caprolactam AH-Salz, Adipinsäureester des Hexamethylendiamins 11-Aminoundecansäure, Laurinlactam, hohe Viskositätswerte in ihren Schmelzen besitzen und deshalb nur in Pulverform zur Anwendung kommen; sie besitzen auch keine ausreichende Flexibilität;
- Copolyester, wie z.B. Tere-und Isophthalsäureester aus Glykolen, z.B. Hexandiol-1,6,
  a) bei niedriger Viskosität ($n \leq 0.4$) Klebschichten liefern, die schlecht haften und leicht brechen,
  b) bei mittlerer Viskosität ($0{,}4\ n \leq 0{,}85$) sehr hohe Verarbeitungstemperaturen (≥ +250 °C) benötigen und die Klebschichten nicht hydrolysebeständig sind,
  c) bei hoher Viskosität ($n \geq 0{,}9$) sehr schwer schmelzen und die Klebfläche schlecht benetzen.

Darüber hinaus ist die Thermosensibilität dieser Rück gratpolymer, insbesondere bei Polyamiden, ein kritischer Parameter und damit die sog. "Heat History" schwer in den Griff zu bekommen. Die damit

hergestellten Klebverbunde zwischen gleichen und ungleichen Substraten bauen z.B. bei der Sterilisation bei 130 °C/60 Min. stark ab.

Unter Packmitteln werden im Zusammenhang mit der vorliegenden Erfindung Behälter, Kartonagen, Schachteln, Dosen und dergleichen verstanden, die zur Verpackung, z.B. von Lebens-und Genußmitteln, Pharmazeutika, Kosmetika, technischen Produkten, Getränken, Mineralölen, Lösungsmitteln, Wasser, dienen. Ein besonderes Gebiet sind hierbei die im Markt anzutreffenden Hohlkörper, insbesondere zylindrische Dosen und Behälter für Flüssigkeiten, wie z.B. Getränke, Öle, aber auch Frischhaltegüter, wie z.B. Fleisch- und Wurstwaren, Fertiggerichte, Nüsse und dergleichen, vorzugsweise aus Weißblech und Aluminium.

Die Packmittel können aus unterschiedlichen Substraten und Substratkombinationen hergestellt sein, Hierzu gehören Metalle, wie z.B. Stahl-und Aluminiumbleche und -folien, die z.B. mit Kunststoff-und/oder Cellulosesubstraten kaschiert und/oder mit einem Lacküberzug versehen sind. Aber auch Kunststoffe, insbesondere Thermoplaste, wie z.B. Polyethylen, Polypropylen, Polyvinylchlorid, Polyvinlidenchlorid, Ethylen-Vinylester-Copolymere, Polyvinylalkohole, sind als Packmittel geeignet. Sie werden ebenfalls allein oder als Verbundsubstrate mit Metall-und/oder Cellulosesubstraten eingesetzt. Letztlich sind als Packmittel solche aus Cellulosematerialien, wie Papier, Karton und dergleichen, geeignet. Auch sie können allein oder im Verbund mit Metall-und/oder Kunststoffsubstraten oder ausgerüstet mit einer Lack-und/oder Wachsschicht eingesetzt werden.

Unter Laschen werden Funktionsteile bzw. Handhaben für ein Packmittel im vorliegenden Falle verstanden, die mit den Verpackungsbehältern fest verbunden sind und dazu dienen, daß eine Verpackung, insbesondere Behälter, leichter zu öffnen, zu transportieren und/oder aufzuhängen ist. Es wird dabei davon ausgegangen, daß das Packmittel bzw. die Stellen, z.B. Deckel, an denen die Lasche auf dem Packmittel aufgebracht ist, z.B. durch Querschnittsschwächungen (Ritzung) so dimensioniert ist, daß ein Aufreißen des Packmittels mit der Lasche erfolgen kann. Als Beispiel für derartige Behälter wird auf die CH-PS 417 376 verwiesen. Diese Laschen können aus denselben Substraten wie die Packmittel gefertigt werden. Vielfach sind ihre Substrate durch Einlagen und/oder Einbetten von Materialien, wie z.B. Fasern, verstärkt, um selbst bei Erfüllung einer der vorstehenden Funktionen nicht beschädigt oder zerstört zu werden.

Damit die Lasche eine der obigen Funktionen, insbesondere die des Aufreißens, erfüllen kann, ist es notwendig, daß der Verbund zwischen Packmittel und Lasche so stark ist, daß bei Krafteinwirkung derselbe nicht geschwächt oder zerstört wird. Deshalb konnte diese Aufgabe seither nur mit einer Nietverbindung gelöst werden. Die in der EP-PS 0 078 625 beschriebene Klebverbindung zwischen Packmittel und Lasche mit Standardrückgratpolymeren erfüllt diese Aufgabe nur dann partiell, wenn die Klebfläche vorbehandelt und mit einem Haftprimer versehen ist. Bei erhöhter Temperaturbelastung, wie dies z.B. bei erwärmten Fertiggerichten gegeben ist, führt die zum Aufreißen notwendige Kraft, die über die Lasche an die vorgegebene Sollbruchstelle einwirken soll, zu einem Bruch bzw. Abscheren an der Klebverbundfläche. Analoge Vorgänge sind bei Krafteinwirkungen in der Kälte, beim Transport und/oder beim Aufhängen eines Packmittels gegeben.

Aus dieser Erkenntnis stellt sich die Aufgabe, daß ein temperaturbeständiger Klebverbund zwischen Packmittel und Lasche eine solche Klebfestigkeit besitzen muß, daß bei Krafteinwirkung über Zug-, Zugscher-und/oder Abschälkräfte bei unterschiedlichen Temperaturen die Klebfestigkeit größer bzw. höher sein muß als die zum Aufbrechen bzw. Aufreißen des Packmittels notwendige Kraft. Erst dann ist eine Lasche ein sicherer Funktionsteil an einem Packmittel, insbesondere an einem Behälter.

Aufgabe der Erfindung ist es, ein Packmittel mit einer Lasche bereitzustellen, das in seiner Herstellungsweise einfach ist und an der Verbundstelle gute Wärme-und Kältestandfestigkeiten besitzt, um den unterschiedlichen Funktionen zum Zeitpunkt des Aufreißens, Transportes und/oder Aufhängens gerecht zu werden.

Eine weitere Aufgabe der Erfindung ist es, einen für die Lösung der ersten Aufgabe geeigneten Klebstoff zu entwickeln.

Schließlich ist es noch Aufgabe der Erfindung, anhand eines bestimmten Klebstoffes ein spezifisches Verfahren zum Ankleben der Lasche an das Packmittel aufzufinden.

Diese Aufgaben werden, wie aus den vorstehenden Ansprüchen ersichtlich, gelöst.

Dabei war es überraschend, daß die erfindungsgemäß vorgeschlagenen Blockcopolymere, anstelle der bekannten Standardrückgratpolymere eingesetzt, den gewünschten Effekt erzielen.

Gegenstand der Erfindung ist also die Herstellung eines temperaturbeständigen Klebverbundes zwischen Lasche und Packmittel, insbesondere das Kleben von Aufreißlaschen an einen Wandteil eines Behälters mit einem lösungsmittelfreien, thermoplastischen Schmelzklebstoff, der aus

a) einem oder mehreren Rückgratpolymeren mit gleichen und/oder unterschiedlichen Gehalten an Segmenten aus Amid-, Imid-, Ester-und/oder Etherblöcken der allgemeinen Formel

$$HO\left[A\right]_{n+1}-\!-\!-\left[B\right]_{m}-\!-H\,.$$

wobei $A = -\underset{\underset{O}{\|}}{C}-PA,\ -\underset{\underset{O}{\|}}{C}-PI,\ -\underset{\underset{O}{\|}}{C}-PE-O-;\ -\underset{\underset{O}{\|}}{C}-PES-O-,\ PA/PI$

$$\left[\underset{\underset{O}{\|}}{C}-PA-\underset{\underset{O}{\|}}{C}-O-PE-O\right] \qquad \left[\underset{\underset{O}{\|}}{C}-PA-\underset{\underset{O}{\|}}{C}-O-PES-O\right]$$

$$\left[\underset{\underset{O}{\|}}{C}-PI-\underset{\underset{O}{\|}}{C}-O-PE-O\right] \qquad \left[\underset{\underset{O}{\|}}{C}-PI-\underset{\underset{O}{\|}}{C}-O-PES-O\right]$$

B = PA, PI, PE, PES und/oder ein Blocksegment aus A darstellt, n = eine ganze Zahl von 0 bis 50,m = eine ganze Zahl von 0 bis 50 ist, das Verhältnis zwischen PA und/oder PI zu PE und/oder PES in den Blocksegmenten zwischen 1 : 10 und 10 : 1 und das Verhältnis A : B zwischen 1 : 20 und 20 : 1, dabei PA = Polyamid/Copolyamid-, PI = Polyimid-, PE = Polyether-und PES = Polyester/Copolyesterblöcke bedeuten.
und

b) gegebenenfalls weiteren bekannten Zusätzen besteht.

Die erfindungsgemäß verwendeten Rückgratpolymere in den Schmelzklebstoffen für den Klebverbund zwischen Lasche und Packmittel sind entweder Handels-oder Entwicklungsprodukte.

Bei den erfindungsgemäßen Rückgratpolymeren handelt es sich um Blockccpolymere bzw. segmentierte Copolymere aus:

- Blockcopolyetheramiden,
- Blockcopolyesteramiden,
- Blockcopolyetheresteramiden,
- Blockcopolyetherimiden,
- Blockcopolyesterimiden,
- Blockcopolyetheresterimiden,
- und dergleichen.

Die Blockcopolyether-, Blockcopolyetherester-und Blockcopolyesteramide sind Polykondensations-oder Copolykondensationsprodukte aus Blockpolyamiden bzw. Blockcopolyamiden mit reaktiven Endgruppen und Blockpolyestern bzw. Blockcopolyestern mit reaktiven Endgruppen, wie u.a.:

- Blockpolyamid-oder Blockcopolyamid-$\alpha,\omega$-Dicarbonsäuren, am Kettenende entweder mit Blocketherdiol oder Blockpolyetherdiamin;
- Blockpoly-oder Blockcopolyamiddiamin, am Ketten ende mit Blockpolyether, die zusätzlich am Kettenende carboxyliert sind.

Besonders geeignete Rückgratpolymere für die temperaturbeständigen Schmelzklebstoffe für den erfindungsgemäßen Laschen/Packmittelklebverbund sind Blockpoly-und/oder Blockcopolyetheresteramide aus Polyamide 6, 11 oder 12 und Copolyamide 6, 11 oder 12 mit Polyoxypropylenglykol und Polyoxytetramethylenglykol.

Die Blockcopolyester-und Blockcopoletherimide und -polyamidimide werden u.a. über Polykondensation bzw. Copolykondensation aus Diaminodiphenylether; Diisocyanaten, wie z.B. Diphenylmethandiisocyanat mit Dicarbonsäurekomponenten, wie z.B. Pyromellithsäuredianhydrid, Trimellithsäureanhydrid erhalten, die dann mit reaktiven Endgruppen, wie bei den Blockcopolyetheramiden, ausgestattet werden und schließlich über Poly-oder Copolykondensation mit Blockpolyester, Blockcopolyester und Blockpolyether mit reaktiven Endgruppen erhalten werden.

Für hochtemperaturbeständige Klebverbunde zwischen Lasche und Packmittel sind besonders die Blockcopolyester-, Blockcopolyetherimide und/oder -polyamidimide, insbesondere solche mit Maleinimidsegmenten, geeignet.

Besonders bevorzugte Rückgratpolymere für Schmelzklebstoffe zur Herstellung der erfindungsgemäßen temperaturbeständigen Klebschicht zwischen Lasche und Packmittel sind

a) ein Blockcopolyetheramid aus 15 bis 95 Gew.-% eines Polyamids und bis 85 Gew.-% eines Polyesters und/oder

b) ein Blockcopolyetheramidimid aus 15 bis 95 Gew.-% eines Polyamids und Polyimids, insbesondere Maleinimid, und 5 bis 85 Gew.-% eines Polyesters, die durch Polykondensation von Blockcopolyamiden bzw. Blockcopolyamidimiden mit endständigen reaktiven Gruppen und Blockcopolyestern mit endständigen reaktiven Gruppen erhalten werden.

Diese neuen Rückgratpolymeren haben Schmelz-und Erweichungspunkte zwischen 100 und 350 °C, vorzugsweise 120 bis 250 °C, insbesondere 130 bis 220 °C. Die Glasübergangstemperaturen liegen bei ≤ +20 °C.

Die Schmelz-und Verarbeitungsviskositäten können dabei in großen Bereichen schwanken und werden wesentlich auch von der Verarbeitungstemperatur mitbestimmt. Sie liegen z.B. im allgemeinen zwischen 10 und 5.000 Pa.s/200 °C, insbesondere 80 und 1.500 Pa.s/200 °C. Die Polyimidblöcke enthaltenden Blockcopolymere besitzen Viskositäten von 50 bis 2.000 mPa.s/250 °C.

Im Gegensatz zu den Standard-Polyamiden und -Copolyamiden können die neuen Rückgratpolymere aus den Blockcopolymeren in einer schutzgasfreien Atmosphäre verarbeitet werden. Für den Nahrungsmittel-und Pharmabereich lassen sich auch Schmelzklebstoffe herstellen und aufbereiten, die frei von Additiven, Antioxidantien und Hitzestabilisatoren sind. Denn gerade bei den Antioxidantien und Hitzestabilisatoren handelt es sich vorzugsweise um sterisch gehinderte Phenolverbindungen, wie z.B. 2,6-Di-tert.-butyl-4-methylphenol die physiologisch nicht unbedenklich sind.

Über die Verhältnisse der Polymerblöcke und -segmente unter-und zueinander lassen sich die mechanischen, chemischen, thermischen und adhäsiven Eigenschaften der Blockcopolymeren in weiten Grenzen verändern, um zu maßgeschneiderten Rückgratpolymeren für die Schmelzklebstoffe zu gelangen.

Die Einflußparameter sind folgende:

a) Die Polyetherblöcke kontrollieren die hydrophilen und antistatischen Eigenschaften und die Flexibilität.

b) Die Polyesterblöcke kontrollieren zusätzlich zu a) die Adhäsion auf den diversen Substratoberflächen.

c) Die Polyamidblöcke kontrollieren den Schmelz-und Erweichungspunkt des Copolymers und die Temperaturbeständigkeiten, die Dichte und die chemische Beständigkeit.

d) Die Polyimidblöcke kontrollieren die Dauer-und Hochtemperaturbeständigkeit in den Blockcopolymeren.

Weitere Einflußparameter sind

- die Kettenlänge des Polyamidblocks auf die Schmelzpunkte.
- die Gewichtsverhältnisse der Blöcke A : B und die der Blocksegmente innerhalb A und B auf die Härte und
- der Gehalt an Polyetherblöcken ist eine bestimmende Funktion für den elastomeren Charakter eines der Rückgratpolymere.

Je nach gewünschten Endeigenschaften eines Rückgratpolymeren liegen die Gewichtsverhältnisse der Blöcke A : B zwischen 1 : 20 und 20 : 1, wobei "n" und "m" eine ganze Zahl von 0 bis 50 sind. Innerhalb der einzelnen Blocksegmente in A und B können die Gewichtsverhältnisse ebenfalls zwischen PA/PI : PE/PES von 1 : 10 bis 10 : 1 betragen.

Im Vergleich zu den Standardpolymeren, wie sie in EP-PS 0 078 625 beschrieben werden, bieten die vorstehend beschriebenen Rückgratpolymere als Klebstoff und in der Klebschicht des erfindungsgemäßen Klebverbunds Lasche/Packmittel folgende Vorteile:

- verbesserte rheologische Eigenschaften bei der Verarbeitung, d.h. die Viskositätswerte sind niedriger;
- geringeres Kriechen während der Abbindung und bei der Lagerung;
- hohe Temperaturbeständigkeiten, z.B. auch bei den Sterilisationstemperaturen und in der Kälte;
- gute Adhäsionseigenschaften auf vielen Substratoberflächen ohne Oberflächenvorbehandlung und Haftprimer
- gute zähelastische Eigenschaften der abgebundenen Klebschicht.

Da beim Einsatz der neuen Schmelzklebstoffe keine Oberflächenvorbehandlungen und Haftprimer notwendig sind, ist zusätzlich auch ein wirtschaftlicher Vorteil geboten.

Folgende Werkstoffe bzw. Substrate lassen sich mit den beschriebenen Rückgratpolymeren verbinden:

- Metalle, wie Stahl, Weißblech, Aluminium
- Kunststoffe, wie Thermoplaste aus Polyethylen, Polypropylen, PVC, Polycarbonat, 2-Polymethylpenten

u.v.a.m.

- Cellulosematerialien, wie z.B. Papier, beschichtetes Papier, Pappe, Wellpappe u. dgl.

Die vorstehend beschriebenen Rückgratpolymere können nun allein oder modifiziert eingesetzt werden. Während bei den Standardpolymeren Polyamide, Copolyamide, Polyester und Copolyester eine Reihe von Verträglichkeitsproblemen mit Modifikatoren, wie andere Copolymere, Klebharze, Wachse u. dgl. bestehen, besitzen die neuen Rückgratpolymere diese negativen Eigenschaften nicht. Sie sind mit Ethylen-Vinylacetat-Copolymeren, diversen Klebharzen, wie Kolophoniumharzester, Terpenphenolharzen, aromatischen und aliphatischen Kohlenwasserstoffharzen und Wachsen, wie Polyethylenwachs, verträglich.

Besonders vorteilhaft zur Modifikation der neuen Rückgratpolymeren sind gepfropfte und/oder segmentierte Standardpolymere und/oder Copolymere, wie überraschenderweise gefunden wurde. Hierbei handelt es sich insbesondere um gepfropfte Polyolefine, wie z.B. Polyethylen, Polypropylen, die mit polaren Gruppen gepfropft worden sind. Aber auch gepfropfte Copolymere des Ethylens und Butylens mit Vinylestern, wie z.B. Vinylacetat, Acrylat; thermoplastische Kautschuke, wie z.B. Styrol-Butadien-Styrol-Blockcopolymere, sind geeignet. Die aufgepfropften polaren Gruppen können u.a. sein: Ethylenisch ungesättigte Verbindungen, wie z.B. Acryl-und Methacrylsäure und deren Ester, Maleinsäure und deren Ester, Silanacrylate und Monostyrol. Bei den segmentierten Copolymeren handelt es sich vorzugsweise um Copolymere des Ethylens mit Vinylestern, wie z.B. Vinylacetat, die besondere Segmentgehalte an Acryl-und/oder Methacrylgruppen besitzen können. Durch das Aufpfropfen von polaren Gruppen auf die Basispolymeren können die adhäsiven Eigenschaften verbessert werden und sie können gleichzeitig als "Phasenvermittler" beim Verkleben von polaren und unpolaren Werkstoffen dienen. Die Pfropfgehalte liegen im allgemeinen zwischen 1 und 50 %, vorzugsweise 1 bis 25 %, insbesondere 1 bis 15 % - bezogen auf das Gewicht. Neben diesen technischen Vorteilen tragen sie auch zur Reduzierung der Rohstoffeinstandskosten der neuen Schmelzklebstoffe für eine Laschen-/Packmittelverbund bei.

Zur Steigerung der Adhäsion an den Grenzflächen können neben Klebharzen auch sog. Adhäsionspromotoren, wie z.B. Silane, eingesetzt werden. Diese haben insbesondere bei Klebflächen aus Metallen und unpolaren Kunststoffsubstraten eine positive Wirkung und verbessern zusätzlich die Adhäsionseigenschaften bei hohen und tiefen Temperaturen an den Grenzflächen.

Des weiteren können den Schmelzklebstoffen Farbstoffe, Pigmente, Füllstoffe und, soweit notwendig, Antioxidantien und Hitzestabilisatoren zugesetzt werden.

Durch die gebotenen Modifikationsmöglichkeiten können den neuen Schmelzklebstoffen zusätzlich spezifische Eigenschaften, wie Viskositätsreduzierung, verbesserte Adhäsion an den Grenzflächen verliehen und auch die Wirtschaftlichkeit verbessert werden, ohne dabei die gute Temperaturbeständigkeit zu mindern.

Aus diesen neuen Schmelzklebstoffen lassen sich auch Folien in unterschiedlichen Dicken herstellen, um gegebenenfalls in einer Serienfertigung die Klebstoffapplikation zu vereinfachen und zu rationalisieren.

Mit diesen neuen Rückgratpolymeren lassen sich Schmelzklebstoffe herstellen, die in ihren Zug-, Zugscher-und Schälfestigkeiten über denen auf der Grundlage von Standardpolymeren liegen und auch eine verbesserte Temperaturbeständigkeit in Wärme und Kälte besitzen. Sie können auch bei niedrigen Applikationstemperaturen wegen ihrer verbesserten rheologischen Eigenschaften verarbeitet werden.

Obwohl die erfindungsgemäßen Rückgratblockcopolymeren eine gute Adhäsion auch auf unpolaren Substraten entwickeln, kann diese durch Zusätze an gepfropften Polyolefinen und/oder Copolymeren noch weiter gesteigert werden wie überraschenderweise gefunden wurde. Diese gesteigerte Adhäsion wirkt sich besonders an der Grenzfläche der unpolaren Substratoberfläche vor allem dann aus, wenn dem Klebverbundhersteller nicht bekannt ist, welche Art von Trenn-und Gleitmittel bei der Substratherstellung verwendet wurde. Denn diese Trenn-und Gleitmittel besitzen charakteristische abhäsive Eigenschaften. Diese Probleme treten insbesondere bei Substraten aus thermoplastischen Polyolefinen, wie z.B. Polyethylen und Polypropylen auf. Werden nun eines oder mehrere der erfindungsgemäßen Rückgratpolymere mit einem oder mehreren gepfropften Polymeren oder Copolymeren modifiziert, so lassen sich die Adhäsionswerte an der unpolaren Grenzfläche um das 1,1-bis 2-fache steigern. So sind z.B. zur Modifikation von Polyolefin-/Metallverbunden gepfropfte Polyethylen, mit einem Pfropfgehalt von 5 bis 15 %, insbesondere 10 bis 15 %, an Acrylsäure und/oder Methacrylsäure oder eines deren Alkylesters geeignet. Bei Klebverbunden aus Papier, z.B. Kraftpapier, mit einem unpolaren Substrat, z.B. Polypropylen, eignet sich vorzugsweise gepfropftes ataktisches Poly propylen mit einem Propfgehalt zwischen 1 und 10 % Acrylsäure und 1 bis 10 % Monostyrol. Aber auch bei Klebverbunden zwischen Metall-und Cellulosesubstraten wirkt sich eine solche Modifikation positiv aus. Da insbesondere bereits ein geringer Gehalt an aufgepfropfter Acryl-und/oder Methacrylsäure die Adhäsion auf der Metalloberfläche begünstigt.

Ein weiterer Grund der Erfindung ist ein vereinfachtes und wirtschaftliches Verfahren zur Herstellung eines Klebverbundes zwischen einer Lasche und einem Packmittel aus gleichen und unterschiedlichen

Substraten. Um dieses Ziel auch verfahrenstechnisch im Gegensatz zu den bekannten Nachteilen der CH-PS 417 376, EP-PS 0 065 417 und EP-PS 0 078 625 zu erreichen, wurde die Aufgabe gestellt, ein Verfahren zu entwickeln, in dem die nachstehenden kritischen und kostspieligen Verfahrensparameter beseitigt werden:

- extreme Substratdeformation bei Nietbefestigungen;
- schlechte Entleerung des Füllgutes, weil Ritzung der Packmittel-bzw. Behälteröffnung im Zentrum liegt;
- keine Oberflächenvorbehandlung der metallenen Substratoberflächen, wie z.B. Phosphor-und Chromsäure bei Aluminium;
- kein Ausrüsten der vorbehandelten Oberfläche mit lösungsmittelhaltigen Haftprimern, wozu kostenaufwendige Beschichtungs-, Trocknungs-und Härtungsanlagen notwendig sind und
- Schutzgasatmosphäre bei Schmelzen, insbesondere bei Polyamiden und Copolyamiden.

Diese Aufgabe wird erfindungsgemäß durch die Herstellung einer temperaturbeständigen Klebschicht zwischen Lasche und Packmittel mit einem Schmelzklebstoff gemäß den vorstehenden Ansprüchen gelöst. Die Herstellung einer erfindungsgemäßen temperaturbeständigen Klebschicht zwischen Lasche und Packmittel mit einem erfindungsgemäßen Schmelzklebstoff kann u.a. auf folgende Verfahrensarten beruhen:

Verfahren 1

- Der Schmelzklebstoff wird in einer bekannten Aufschmelzvorrichtung vorgeschmolzen und kurz vor der Applikation auf die Verarbeitungstemperatur weiter erwärmt.
- Der Klebstoffauftrag auf die Klebfläche erfolgt über eine Düse oder einen Sprühkopf und kann mit einer Dosiervorrichtung, gegebenfalls programmgesteuert mit einem Mikroprozessor, unterstützt werden.
- Aufpressen der Lasche und/oder des Packmittels auf das Klebstoffbett.
- Nach dem Abkühlen der Klebschicht besitzt sie volle Funktionstüchtigkeit.

Verfahren 2

- Die Klebfläche der Lasche wird zuvor mit dem Schmelzklebstoff versehen und kann mit der Klebschicht zwischengelagert werden.
- Zur Herstellung des Laschen/Packmittelverbundes wurde die mit Klebstoff versehene Lasche auf dem Packmittel positioniert und die Klebschicht mittels Wärme zumindest an den Grenzflächen zwischen Klebstoff und Substratoberfläche so verflüssigt, daß letztere einwandfrei benetzt und mittels Anpreßdruck ein Verbund erhalten wird.
- Nach dem Abkühlen besitzt die Klebschicht volle Funktionalität.

Verfahren 3

- Das Packmittelsubstrat wird mit einem Schmelzklebstoffüberzug versehen und übernimmt zusätzlich die Schutzfunktion gegen Korrosion, Abrasion und dgl.
- Die Lasche wird auf diesem Packmittelsubstrat angeordnet und mittels Wärme und einem Anpreßdruck fest mit der Substratoberfläche verbunden.

Die Ausrüstungen mit Schmelzklebstoffen der flächigen Substratbahnen können in bekannten Beschichtungsanlagen und durch Extrusion aus der Schmelze von Rolle zu Rolle erfolgen. Liegt dagegen bereits ein fester Klebfilm aus dem Schmelzklebstoff vor, kann er auf die flächige Substratbahn durch Erwärmen aufkaschiert werden.

Die schematische Darstellung des erfindungsgemäßen, vereinfachten Herstellungsverfahrens geht aus der Fig. 1 hervor.

In der Fig. 1 sind 3 Verfahrenswege aufgezeigt, wie die Schmelzklebstoffe appliziert und in die Fertigungslinien integriert werden können. Die Herstellung der Packmittel bzw. Behälter einerseits und der Lasche andererseits erfolgt dabei auf getrennten Fertigungseinheiten. Für den Fertigungsablauf ist es unwesentlich, ob mit Klebstoff ausgerüstete oder nicht ausgerüstete flächige Substratbahnen eingesetzt werden.

Deckelfertigung

Das flächige Substrat (Blech) wird als Tafel oder vom Coil der Station "Sicken" 1 zugeführt. Hier wird der Deckel profiliert. In der anschließenden Station "Ritzen" 2 wird das profilierte Substrat in einem definierten Bereich vorzugsweise im Bereich einer in sich geschlossenen umfänglichen Linie auf eine mögliche Restdicke reduziert (Querschnittsschwächung). Über die Ritz-bzw. Schwächungslinie an einer definierten Stelle wird die Packmittelöffnungsstelle markiert, wo also das Aufbrechen und einsetzende Aufreißen des Deckels erfolgen soll. Daran schließt sich die Klebstation 3 an. Bei mit Schmelzklebstoff ausgerüsteten Klebflächen erfolgt hier die Wärmereaktivierung und das Anpressen der Lasche. Bei nicht ausgerüsteten Klebflächen wird auf sie die genau definierte Schmelzklebstoffmenge aufgetragen und verpreßt. In beiden Fällen des Anpressens ist es von Vorteil, wenn die Anpreßstempel beheizt sind. - Um nun schnelle Taktzeiten sicherzustellen, hat es sich gezeigt, daß ein Temperaturunterschied zwischen den beiden beheizten Anpreßstempeln ≤ 150 °C, insbesondere ≤ 100 °C, sich als besonders vorteilhaft erweist, wie überraschenderweise gefunden wurde. Zum Schluß wird in der Station 4 der fertige Deckel aus der flächigen Substratbahn gestanzt und bei Station 5 magaziniert.

Laschenfertigung

Die flächige Substratbahn, die vorzugsweise aus einem Blechcoil besteht, wird dem Laschenherstellautomaten 11 zugeführt, wo in mehreren Arbeitsstufen die Lasche geformt wird. Die Lasche wird anschließend in Magazine 15 abgepackt. Ist die Klebfläche noch nicht mit Klebstoff ausgerüstet, ist in den Fertigungsprozess eine Klebstoffdosiervorrichtung 16 zu installieren. Die mit Klebstoff ausgerüstete Lasche wird dem gefestigten Blech (bei 17) zugeführt und bei 3 auf die Oberfläche der vorgesehenen Klebstelle des Deckels unter Wärme und Druck geklebt.

Obwohl die mittels Klebverbundes mit einer Lasche auszurüstenden Packmittel vorzugsweise aus Metall, insbesondere aus Weißblech oder Aluminium, bestehen, kann die Erfindung auch in Verbindung mit anderen Werkstoffen, wie Kunststoffen, Cellulosematerialien und dergleichen bestehen. Da die Packstoffe vielfach auch Verbundlaminate sind, wie z.B. Aluminium mit Polyethylen oder Polypropylen, Verbundfolien aus unterschiedlichen thermoplastichen Kunststoffen, wie z.B. Polyethylen/Polyvinylidenchlorid/Polypropylen, Cellulosematerialien, wie z.B. satiniertes Papier mit Aluminium und/oder thermoplastischen Kunststoffen, sind die Verfahrensbedingungen beim Herstellen einer temperaturbeständigen Klebschicht den Eigenschaften dieser Substrate anzupassen. Um aber auf der anderen Seite einen optimalen Klebverbund zwischen Lasche und Packmittel zu erzielen, hat sich hierbei überraschenderweise gezeigt, daß die nicht mit Schmelzklebstoff beschichtete und benetzte Substratoberfläche vorgewärmt werden sollte. Dabei ist die Vorwärmtem peratur von der Substratart abhängig. Die Vorwärmtemperaturen liegen

bei Metallen ≥ 100 °C, insbesondere ≥ 10 °C über den Schmelz-und Erweichungspunkten der Schmelzklebstoffe,
bei Kunststoffen (Thermoplasten) ≤ 10 °C unter dem Erweichungspunkt des Substrates und bei Cellulosematerialien ≥ 80 °C.

Diese Vorwärmung und auch die Wärmeaktivierung einer bereits auf der Klebfläche aufgebrachten Klebschicht kann mittels Wärmeenergien aus Elektrizität, Dampf, Infrarot, Beflammen, Hochfrequenz und/oder Laser erfolgen. Da bei unpolaren Kunststoffoberflächen, wie z.B. Polypropylen, unter Umständen eine Oberflächenvorbehandlung durch Beflammen notwendig ist, um die adhäsiven Eigenschaften an den Grenzflächen zu verbessern, kann diese Beflammung gleichzeitig als Vorwärmung dienen.

Obwohl beim Einsatz der erfindungsgemäßen Schmelzklebstoffe eine Oberflächenvorbehandlung nicht zwingend vorgeschrieben ist, hat sich gezeigt, daß die Verbundfestigkeiten bei unpolaren Kunststoffoberflächen dann gesteigert werden können, wenn diese Klebflächen durch das vorstehende Beflammen oder durch eine Coronaentladung vorbehandelt werden. Denn durch die Beflammung der unpolaren Kunststoffoberflächen wird die Klebstelle nicht adhäsionsfreundlicher, sondern gleichzeitig - wie vorstehend erwähnt - ein Abschrecken des flüssigen Schmelzklebstoffes durch kühle Klebflächen unterbunden. Gleichzeitig können dadurch, wie überraschend gefunden wurde, die Applikationstemperatur des Schmelzklebstoffes erniedrigt und die Taktzeiten in einer Fertigung verkürzt werden.

Die Taktzeiten in der Fertigung sowohl von mit Schmelzklebstoffen vorausgerüsteten Substraten und Laschen als auch die Herstellung eines Klebverbundes zwischen Lasche und Packmittel ist eine wichtige funktionelle Aufgabe dieser Erfindung. Um eine hohe Wirtschaftlichkeit zu sichern, ist ein sehr hoher

Ausstoß pro Zeiteinheit erforderlich. Hierbei ist es entscheidend, daß der Schmelzklebstoff

- eine niedrige Schmelzviskosität bei einer möglichst niedrigen Applikationstemperatur,
- neben einer guten Benetzungseigenschaft einen ausreichend hohen Tack (Klebrigkeit) und Anfangsklebfestigkeit besitzt

und

- über hohe Adhäsionseigenschaften in einem weiten Temperaturbereich verfügt.

Der Schmelzklebstoff darf bei der Heißapplikation keine Fäden ziehen, wie dies bei solchen auf der Grundlage von Standardrückgratpolymeren gegeben ist. Denn bei Fadenbildung werden nicht nur die Fertigungseinrichtungen und Fügeteile verschmutzt, sondern die Herstellung des Klebverbundes muß unterbrochen werden, weil sowohl Substrat als auch Lasche nicht mehr der Klebstelle zugeführt werden können. Die Fertigungseinrichtungen mit den Klebstellen sind nämlich auf Stückzahlausstöße von 10 bis 1,000 verklebten Laschen/Min. ausgelegt.

Der Anpreßdruck an der Klebstelle kann beid-oder einseitig über Stempel erfolgen. Der ein-oder beidseitige Stempeldruck ist abhängig von der Packmittelart, der Laschen-und Packmittelform. Dieser liegt im allgemeinen bei 0,1 bis 15 bar in Abhängigkeit der Preß-und Takt zeiten.

Aus diesem erfindungsgemäßen Klebverfahren beim Ausbilden einer temperaturbeständigen Klebschicht zwischen Lasche und Packmittel mit einem der erfindungsgemäßen Schmelzklebstoffe ergeben sich folgende technischen und damit auch wirtschaftlichen Vorteile. Diese sind:

- Keine Substratdeformationen, wodurch die Ritzung für die Packmittelöffnung nahe an den Kern-/Spiegelradius gelegt werden kann. Durch diese neue Positionierung und Anordnung der Packmittelöffnung und der aufgeklebten Lasche wird eine bessere und leichtere Entleerung des Füllgutes erzielt.
- Einsatz von dünneren und/oder härteren Packmittelsubstraten.
- Kein Nacharbeiten, da Schutzlackbeschädigungen entfallen.
- Vereinfachung des Laschenbefestigungswerkzeuges.

In der Nahrungsmittel-, Getränke-und Pharmaindustrie, aber auch in technischen Bereichen, hat die Temperaturbeständigkeit von Packmitteln und deren Klebverbunden eine besondere Bedeutung, weil sie beim Erwärmen, z.B. Sterilisieren des Füllgutes, hohen und anschließend beim kühlen Lagern tiefen Temperaturen ausgesetzt sind. Daneben werden auch Pakkungen benötigt, die laufenden Wechselbelastungen bei hohen und tiefen Temperaturen ausgesetzt sind. Bei den Laschen-/Packmittelklebverbunden ist es zusätzlich von besonderer Wichtigkeit, daß die Lasche bei diesen Manipulationen nicht abgeht, weil dadurch der Vorteil einer leichten Packmittelöffnung verlorengeht. Um nun auch bei der Laschen-/Packmittelverklebung eine zusätzliche Vereinfachung in der notwendigen Klebstoffpalette zu haben, bieten die erfindungsgemäßen Schmelzklebstoffe einen weiteren Vorteil gegenüber den eingangs geschilderten Nachteilen der Standardschmelzklebstoffe auf der Grundlage von Standardpolymeren. Da die Blockcopolymere auch einen breiten Bereich in der Temperaturbeständigkeit abdecken und in sich temperaturbeständiger sind, liefern sie auch noch bei hohen und tiefen Temperaturen, z.B. bei +130°C und bei -40°C, sehr gute Klebfunktionen. Die Sterilisationsbedingungen sind oftmals sehr unterschiedlich. Sie liegen im allgemeinen bei 130°C/60 Minuten. Besitzt nun eine Klebschicht - infolge Erweichung - keine Eigenfestigkeit, kann die Lasche während der Sterilisation abfallen. Besitzt sie zusätzlich noch die Eigenschaft des Kriechens (kalter Fluß) beim Abkühlen, können ebenfalls Festigkeitsverluste eintreten. Deshalb muß neben der Temperaturbeständigkeit auch das zähelastische (engl. tough) Verhalten der Klebschicht gegeben sein, d.h. sie darf u.a. nicht verspröden.

Die Erfindung wird anhand folgender Beispiele näher erläutert, sie ist aber nicht auf sie beschränkt.

Folgende Prüfarten gelten für alle Laschen-/Packmittelverbunde:

Die Klebfestigkeiten wurden in Anlehnung an DIN-Norm bestimmt:

Zugfestigkeit: DIN 53288
Zugscherfestigkeit: DIN 53 283
Schälfestigkeit: DIN 53 282
Klebfläche: ca. 50 $mm^2$ an Originallaschen-/Packmittelklebverbunden
Vorschub: 2 mm/Min.

Definition der Klebfestigkeit: vor Sterilisation:
Nach 24-stündiger Lagerung der Klebverbunde bei 20 °C
nach Sterilisation:
Prüfung unmittelbar nach der Sterilisation bei sinkender Temperatur durch Abkühlen
4 Tage nach Sterilisation:
Kühle Lagerung bei -10 °C und anschließender Erwärmung auf Raumtemperatur

Sterilisationsbedingungen

Die Sterilisation wurde sowohl
a) im Wasserbad
und
b) im Dampfbad bei +130°C/60 Minuten durchgeführt.

Beispiele 1 bis 3

Zur Herstellung der verklebten Prüfkörper wurde eine spezifische Klebvorrichtung entwickelt und gebaut, um die Prüfungen an Originalteilen aus Deckel und Lasche vornehmen zu können. Die Klebvorrichtung bestand aus einem Werkzeugoberteil und -unterteil, in die Fügeteilführungspositionen integriert waren. Im Unterteil war die Laschenpositionierung angeordnet. Nach dem flüssigen Schmelzklebstoffauftrag auf die Klebfläche der Lasche (ca. 50 $mm^2$) wurde der Deckel aufgelegt und das Werkzeug mit dem jeweiligen Preßdruck geschlossen und die Fügeteile miteinander verbunden. Die Temperaturen der beheizten Anpreßstempel waren unterschiedlich. Um die erfindungsgemäß verbesserten Funktionen eines erfindungsgemäßen Schmelzklebstoffes sowohl in den Klebfestigkeiten als auch in den Temperaturbeständigkeiten im Vergleich zu Schmelzklebstoffen auf der Grundlage von Standardrückgratpolymeren darzustellen, wurden als Vergleichsklebstoffe die Schmelzklebstoffe A und B ausgewählt. Die Schmelzklebstoffe 1, 2 und Vergleichsklebstoff B wurden bei +200 °C und die Schmelzklebstoffe 3 und Vergleichsbeispiel A wurden bei +220 bis 230°C appliziert. Die Klebflächen aller Prüflinge wurden nicht oberflächenvorbehandelt und auch nicht entfettet. Weitere Daten sind aus der Tabelle 1 zu ersehen.

Als Prüfsubstrate wurden folgende gewählt:
a) Laschen aus Aluminium
b) Laschen aus PP-gecoatetem Aluminium
c) Deckel: Aluminiumfolien, 110 - 118 µm
d) Deckel: Verbundlaminat aus PP/Alu/PP, 210 - 220µm,
wobei das Kernmaterial Alu eine Dicke von 100 - 110µm hatte.

Klebstoffe

Beispiel 1: Blockcopolyetheramid (PA-12/PTMG)
Schmelzpunkt: 145 °C
Schmelzviskosität/200 °C: 1.200 Pa.s

Beispiel 2: Blockcopolyetheresteramid (PA-11/PPG/PTMG)
Schmelzpunkt: 156 °C
Schmelzviskosität/200 °C: 3.500 Pa.s

Beispiel 3: Blockcopolyetheramidimid (PA-11/Ma-Pi/PPG/PTMG)
Schmelzpunkt: 190 °C
Schmelzviskosität/230 °C: 850 Pa.s

Vergleichsbeispiel A: Copolyamid (PA 6,6/PA 6/12)
Schmelzpunkt: 142 °C
Schmelzviskosität/230 °C: 102 Pa.s

Vergleichsbeispiel B: Copolyester aus Tere-und Isophthalsäure und Butandiol
Schmelzpunkt: 172 °
Schmelzviskosität/200 °C: 293 Pa.s

Legende PA = Polyamid
CoPA = Copolyamid 6, 11 oder 12
MA-PI = Maleinimid
PPG = Polyoxypropylenglykol
PTMG = Polyoxytetramethylenglykol
Alu = Aluminium
PP = Polypropylen
PEG = Polyethylenglykol

Die Ergebnisse aus den Klebfestigkeitsprüfungen sind in Tabelle 2 zusammengefaßt.

Beispiel 4

Zur Herstellung einer Klebschicht zwischen einer Alu-Lasche und einem Alu-Deckel und einer Alu-Lasche und einem Stahldeckel wurde ein Blockcopolyesteramid (CoPA 6, 11/PEG/PPG) mit einem Schmelzpunkt von 138 °C und einer Schmelzviskosität von 180 Pa.s/200 °C eingesetzt und, wie in den Beispielen 1 bis 3 beschrieben, verklebt. Trotz dieses niedrigen Schmelzpunktes des Rückgratpolymeren wurden nach der Sterilisation noch Schälfestigkeiten von 0,4 N/mm/120 °C erzielt. Nach dem Erkalten der Klebschicht betrug sie 5,8 N/mm.

Beispiel 5

Es wurde folgende Schmelzklebstoffmischung hergestellt:
80 Gewichtsteile Blockcopolyetheramid (Rückgratpolymer Beispiel 2)
20 Gewichtsteile gepfropftes Polypropylen mit Pfropfgehalten von 1,5 Gew.-% Styrol und 3 Gew.-% Acrylsäure.

Der Schmelzklebstoff hatte einen Schmelzpunkt von 146 °C und eine Schmelzviskosität von 86 Pa.s/200 °C. Damit wurden Laschen aus glasfaserverstärktem Polypropylen mit Polypropylen gecoateten Stahl-und Alu-Deckeln verklebt. Die Temperaturen der Anpreßstempel betrugen:
Unterteil: 120 °C
Oberteil: 140 °C

Der flüssig aufgetragene Schmelzklebstoff hatte eine Temperatur von 180 °C. Die Fügeteile wurden 2 Sekunden bei einem Druck von 0,3 bar verpreßt. Nach 24 Stunden Lagerung bei Raumtemperatur wurde die Schälfestigkeit vor und nach der Sterilisation ermittelt:
Schälfestigkeit vor Sterilisation: 3,2 N/mm
Schälfestigkeit nach Sterilisation: 0,4 N/mm

Beispiel 6

Es wurde folgende Schmelzklebstoffmischung hergestellt:
70 Gewichtsteile Blockcopolyethercopolyamid (CoPA 6,12/PPG)
30 Gewichtsteile Kolophoniumharzester

Der Schmelzklebstoff hatte einen Schmelzpunkt von 142 °C und eine Schmelzviskosität von 90

Pa.s/200 °C. Damit wurden Alu-Laschen mit Stahlsubstraten bei Anpreßtemperaturen von 150 °C/200 °C verklebt. Sie lieferten folgende Schälfestigkeitswerte:
Schälfestigkeit vor der Sterilisation: 3,7 N/mm
Schälfestigkeit nach der Sterilisation: 0,5 N/mm

Beispiel 7

Zur Herstellung einer Klebschicht zwischen Lasche und Alu-Deckel wurde aus einem Blockpolyesterimid (Ma-PI/PEG/PTMG) mit einem Schmelzpunkt von 210 °C und einer Schmelzviskosität von 1.400 Pa.s/260 °C eine Klebstoffolie (50 µm) über Extrusion hergestellt. Aus dieser Klebfolie wurden Teile in der Größe der Klebfläche(ca. 50 mm²) ausgestanzt. Diese ausgestanzten Klebfolienteile wurden auf die Klebflächen gelegt. Die Anpreßtemperaturen betrugen 270 °C (Unterteil) und 210 °C (Oberteil) und der Anpreßdruck 0,5 bar. Die Preßkontaktzeit lag zwischen 2 und 3 Sekunden. Die Schälfestigkeiten betrugen:
vor der Sterilisation: 7,2 N/mm
nach der Sterilisation: 4,7 N/mm

Beispiel 8

Zur Herstellung einer Klebschicht zwischen einer Lasche aus Karton und einem Behälter aus einem Verbundlaminat aus Papier und Polyethylen wurde ein Schmelzklebstoff mit einer Schmelzviskosität von 80 Pa.s/200 °C und einem Erweichungspunkt von 115 °C gewählt. Der Schmelzklebstoff bestand aus 70 Gewichtsteilen eines Blockcopolyesteramids (PA-12/PEG) mit einer Schmelzviskosität von 120 Pa.s/200 °C, 15 Gewichtsteilen eines gepfropften ataktischen Polypropylens mit einem Pfropfgehalt von 1,5 Gew.-% Monostyrol und 3 Gew.-% Acrylsäurebutylester, Schmelzindex (2,10 kg/190 °C): 8,0, und 15 Gewichtsteilen eines Kolophoniumharzesters, Erweichungspunkt: 110 °C. Der damit hergestellte Klebverbund wurde bei +75 °C/30 Minuten wärmebehandelt und anschließend die Schälfestigkeiten bestimmt.
Schälfestigkeit vor der Wärmebehandlung: 3,8 N/mm
Schälfestigkeit nach der Wärmebehandlung: 3,6 N/mm

Bei beiden Prüfungen trat ein Schälbruch im Papiersubstrat ein.

| Beispiel Nr. | Klebstoff Nr. | Substrat-kombinationen | Werkzeugtemperatur Anpreßstempel 1 (Oberteil) °C | Werkzeugtemperatur Anpreßstempel 2 (Unterteil) °C | Anpreßdruck bar | Kontaktzeit Sekunden |
|---|---|---|---|---|---|---|
| 1 | 1 | Alu/Alu | 100 | 200 | 0,5 | 30 |
| | | Alu/PP | 100 | 200 | 0,4 | 10 |
| | | PP/PP | 80 | 170 | 0,2 | 3 |
| 2 | 2 | Alu/Alu | 115 | 204 | 0,5 | 10 |
| | | Alu/PP | 115 | 204 | 0,3 | 8 |
| | | PP/PP | 100 | 180 | 0,1 | 2 |
| 3 | 3 | Alu/Alu | 130 | 250 | 0,5 | 10 |
| | | Alu/PP | 115 | 250 | 0,1 | 2 |
| | | PP/PP | nicht geprüft | | | |
| Vergleichs-beispiel A | A | Alu/Alu | 115 | 215 | 0,5 | 30 |
| | | Alu/PP | 115 | 215 | 0,3 | 10 |
| | | PP/PP | nicht geprüft | | | |
| Vergleichs-beispiel B | B | Alu/Alu | 140 | 220 | 0,5 | 10 |
| | | Alu/PP | 120 | 220 | 0,3 | 5 |
| | | PP/PP | 100 | 200 | 0,1 | 2 |

Tabelle 1: Verklebungsbedingungen

| | Klebstoff | | | | | | | | | Vergleichsklebstoff | | | | | |
|---|---|---|---|---|---|---|---|---|---|---|---|---|---|---|---|
| | 1 | | | 2 | | | 3 | | | A | | | B | | |
| Substratkombinationen | Alu/ Alu | Alu/ PP | PP/ PP | Alu/ Alu | Alu/ PP | PP/ PP | Alu/ Alu | Alu/ PP | PP/ PP | Alu/ Alu | Alu/ PP | PP/ PP | Alu/ Alu | Alu/ PP | PP/ PP |
| **Zugfestigkeiten N/mm²** | | | | | | | | | | | | | | | |
| vor Sterilisation | 3,1 | 2,4 | 2,3 | 4,3 | 2,8 | 2,5 | 4,8 | 3,1 | - | 2,9 | 0,4 | - | 1,8 | 0,4 | 0,2 |
| nach Sterilisation | 0,2 | 0,2 | 0,2 | 1,4 | 0,4 | 0,3 | 3,2 | 1,6 | - | 0 | 0 | - | 0 | 0 | 0 |
| 4 Tage nach Sterilisation | 3,8 | 2,5 | 2,1 | 4,3 | 2,6 | 2,5 | 4,8 | 3,1 | - | 2,8 | 0,2 | - | 1,6 | 0,2 | 0,1 |
| **Zugscherfestigkeiten N/mm²** | | | | | | | | | | | | | | | |
| vor Sterilisation | 3,9 | 2,5 | 2,4 | 4,1 | 2,6 | 2,7 | 5,2 | 3,0 | - | 3,1 | 0,5 | - | 1,9 | 0,3 | 0,2 |
| nach Sterilisation | 0,3 | 0,2 | 0,3 | 1,5 | 0,3 | 0,4 | 4,6 | 1,7 | - | 0 | 0 | - | 0 | 0 | 0 |
| 4 Tage nach Sterilisation | 4,0 | 2,7 | 2,5 | 4,2 | 2,5 | 2,6 | 5,2 | 3,1 | - | 2,9 | 0,3 | - | 1,8 | 0,1 | 0 |
| **Schälfestigkeiten N/mm** | | | | | | | | | | | | | | | |
| vor Sterilisation | 6,8 | 3,2 | 2,9 | 7,4 | 3,5 | 3,1 | 7,2 | 4,2 | - | 3,7 | 0,9 | - | 0,4 | 0,2 | 0,1 |
| nach Sterilisation | 0,5 | 0,2 | 0,3 | 3,9 | 0,5 | 0,5 | 5,8 | 2,0 | - | 0 | 0 | - | 0 | 0 | 0 |
| 4 Tage nach Sterilisation | 6,9 | 3,1 | 3,0 | 7,3 | 3,4 | 3,2 | 7,1 | 4,1 | - | 4,1 | 0,7 | - | 0,1 | 0,1 | 0 |

Tabelle 2: Vergleichende Klebfestigkeiten

## Ansprüche

1. Packmittel mit temperaturbeständig verklebter Lasche, insbesondere Aufreißlasche, wobei die Werkstoffe der Lasche und des Packmittels gleich oder verschieden sein können, dadurch **gekennzeichnet**, daß der Klebverbund durch einen lösungsmittelfreien, thermoplastischen Schmelzklebstoff vermittelt wird.

2. Packmittel nach Anspruch 1, dadurch **gekennzeichnet**, daß der Klebverbund ein Rückgratpolymer mit gleichen und/oder unterschiedlichen Gehalten an Segmenten aus Amid-, Imid-, Ester-und/oder Etherblöcken der allgemeinen Formel

$$HO\left[A\right]_{n+1}-\!-\!-\left[B\right]_{m}-\!-H$$

wobei

$$A = -\underset{\underset{O}{\|}}{C}-PA,\ -\underset{\underset{O}{\|}}{C}-PI,\ -\underset{\underset{O}{\|}}{C}-PE-O-;\ -\underset{\underset{O}{\|}}{C}-PES-O-,\ PA/PI$$

$$\left[\underset{\underset{O}{\|}}{C}-PA-\underset{\underset{O}{\|}}{C}-O-PE-O\right]$$

$$\left[\underset{\underset{O}{\|}}{C}-PI-\underset{\underset{O}{\|}}{C}-O-PE-O\right]$$

$$\left[\underset{\underset{O}{\|}}{C}-PA-\underset{\underset{O}{\|}}{C}-O-PES-O\right]$$

$$\left[\underset{\underset{O}{\|}}{C}-PI-\underset{\underset{O}{\|}}{C}-O-PES-O\right]$$

B = PA, PI, PE, PES und/oder ein Blocksegment aus A darstellt, n = eine ganze Zahl von 0 bis 50,m = eine ganze Zahl von 0 bis 50 ist, das Verhältnis zwischen PA und/oder PI zu PE und/oder PES in den Blocksegmenten zwischen 1 : 10 und 10 : 1 und das Verhältnis A : B zwischen 1 : 20 und 20 : 1 dabei PA = Polyamid/Copolyamid-, PI = Polyimid-, PE = Polyether-und PES = Polyester/Copolyesterblöcke bedeuten.

3. Packmittel nach Anspruch 1, dadurch **gekennzeichnet**, daß der Klebverbund gegebenenfalls weitere bekannte Zusätze enthält.

4. Packmittel nach einem der Ansprüche 2 oder 3, dadurch **gekennzeichnet**, daß das Rückgratpolymer ein Blockcopolyetheramid aus 15 bis 95 Gew.-% eines Polyamids und 5 bis 85 Gew.-% eines Polyesters ist, das durch Copolykondensation von Blockcopolyamiden mit endständigen reaktiven Gruppen und Blockcopolyestern mit endständigen reaktiven Gruppen erhalten wurde.

5. Packmittel nach einem der Ansprüche 2 bis 4, dadurch **gekennzeichnet**, daß das Rückgratpolymer ein Blockcopolyetherimid aus 15 bis 95 Gew.-% eines Polyimids und 5 bis 85 Gew.-% eines Polyesters ist, das durch Copolykondensation von Blockcopolyimiden mit endständigen reaktiven Gruppen und Blockcopolyestern mit endständigen reaktiven Gruppen erhalten wurde.

6. Packmittel nach einem der Ansprüche 1 bis 5, dadurch **gekennzeichnet**,, daß zur Modifizierung im Klebverbund ein oder mehrere Pfropfpolymere und/oder Copolymere mit einem Pfropfgehalt von 1 bis 50, vorzugsweise 1 bis 25, insbesondere 1 bis 15 Gew.-%, enthalten sind.

7. Packmittel nach einem der Ansprüche 1 bis 6, dadurch **gekennzeichnet**, daß zur Modifizierung im Klebverbund ein oder mehrere segmentierte Copolymere aus Polyolefin mit Vinylestern enthalten sind.

8. Packmittel nach einem der Ansprüche 1 bis 7 dadurch **gekennzeichnet**, , daß der Klebverbund adhäsionsverbessernde Zusätze, wie Silane, Titanate und dergleichen, enthält.

9. Temperaturbeständiger Klebstoff zur Verwendung zwischen Lasche und Packmittel, insbesondere zwischen einer Aufreißlasche und einem Wandteil eines Behälters, aus gleichen oder unterschiedlichen Werkstoffen, dadurch **gekennzeichnet**, daß der Klebstoff durch einen lösungsmittelfreien, thermoplastischen Schmelzklebstoff, der aus

a) einem oder mehreren Rückgratpolymeren mit gleichen und/oder unterschiedlichen Gehalten an Segmenten aus Amid-, Imid-, Ester-und/oder Etherblöcken der allgemeinen Formel

$$HO \left[ A \right]_{n+1} - - - \left[ B \right]_{m} - - H$$

wobei A =

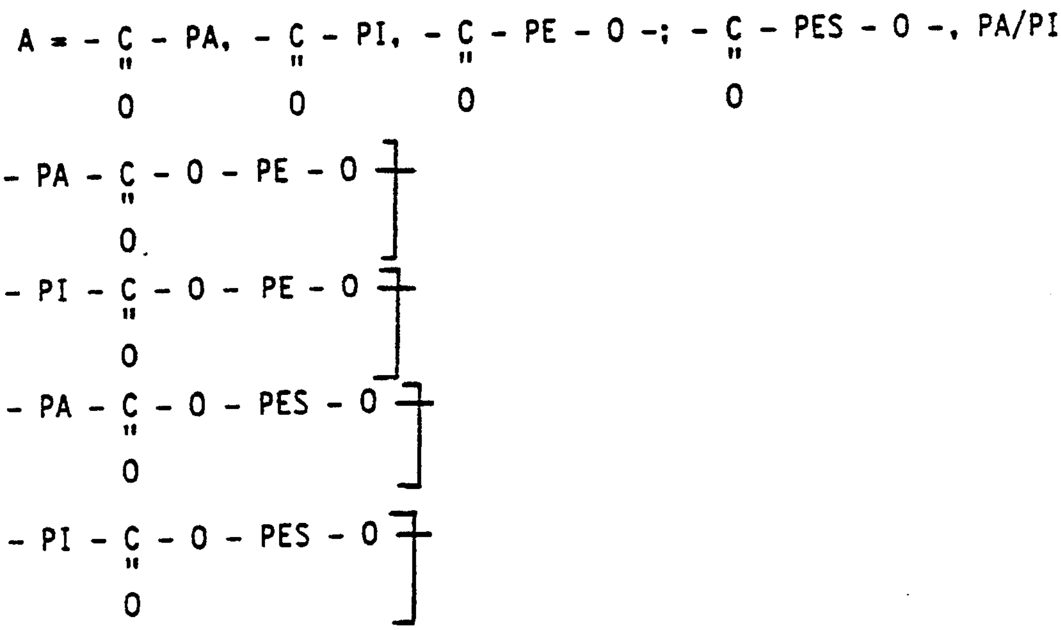

B = PA, PI, PE, PES und/oder ein Blocksegment aus A darstellt, n = eine ganze Zahl von 0 bis 50,m = eine ganze Zahl von 0 bis 50 ist, das Verhältnis zwischen PA und/oder PI zu PE und/oder PES in den Blocksegmenten zwischen 1 : 10 und 10 : 1 und das Verhältnis A : B zwischen 1 : 20 und 20 : 1, dabei PA = Polyamid/Copolyamid-, PI = Polyimid-, PE = Polyether-und PES = Polyester/Copolyesterblöcke bedeuten.
und

b) gegebenenfalls weiteren bekannten Zusätzen gewährleistet wird.

10. Klebstoff nach Anspruch 9, dadurch **gekennzeichnet**, daß das Rückgratpolymer ein Blockcopolyetheramid aus 15 bis 95 Gew.-% eines Polyamids und 5 bis 85 Gew.-% eines Polyesters ist, das durch Copolykondensation von Blockcopolyamiden mit endständigen reaktiven Gruppen und Blockcopolyestern mit endständigen reaktiven Gruppen erhalten wurde.

11. Klebstoff nach Anspruch 9, dadurch **gekennzeichnet**, daß das Rückgratpolymer ein Blockcopolyetherimid aus 15 bis 95 Gew.-% eines Polyimids und 5 bis 85 Gew.-% eines Polyesters ist, das durch Copolykondensation von Blockcopolyimiden mit endständigen reaktiven Gruppen und Blockcopolyestern mit endständigen reaktiven Gruppen erhalten wurde.

12. Klebstoff nach einem der Ansprüche 9 bis 11, dadurch **gekennzeichnet**, daß er zur Modifizierung ein oder mehrere Pfropfpolymere und/oder Copolymere mit einem Pfropfgehalt von 1 bis 50, vorzugsweise 1 bis 25, insbesondere 1 bis 15 Gew.-%, enthält.

13. Klebstoff nach einem der Ansprüche 9 bis 12, dadurch **gekennzeichnet**, daß er zur Modifizierung ein oder mehrere segmentierte Copolymere aus Polyolefin mit Vinylestern enthält.

14. Klebstoff nach einem der Ansprüche 9 bis 13, dadurch **gekennzeichnet**, daß er adhäsionsverbessernde Zusätze, insbesondere Silane, Titanate und dergleichen, enthält.

15. Verfahren zum Verkleben einer Lasche mit einem Packmittel aus gleichen oder unterschiedlichen Werkstoffen, dadurch **gekennzeichnet**, daß man als Klebstoff einen lösungsmittelfreien, thermoplastischen Schmelzklebstoff aus

a) einem oder mehreren Rückgratpolymeren mit gleichen und/oder unterschiedlichen Gehalten an Segmenten aus Amid-, Imid-, Ester-und/oder Etherblöcken der allgemeinen Formel

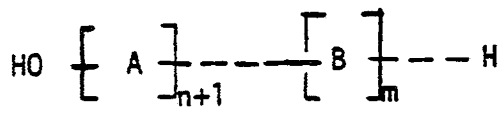

wobei A =

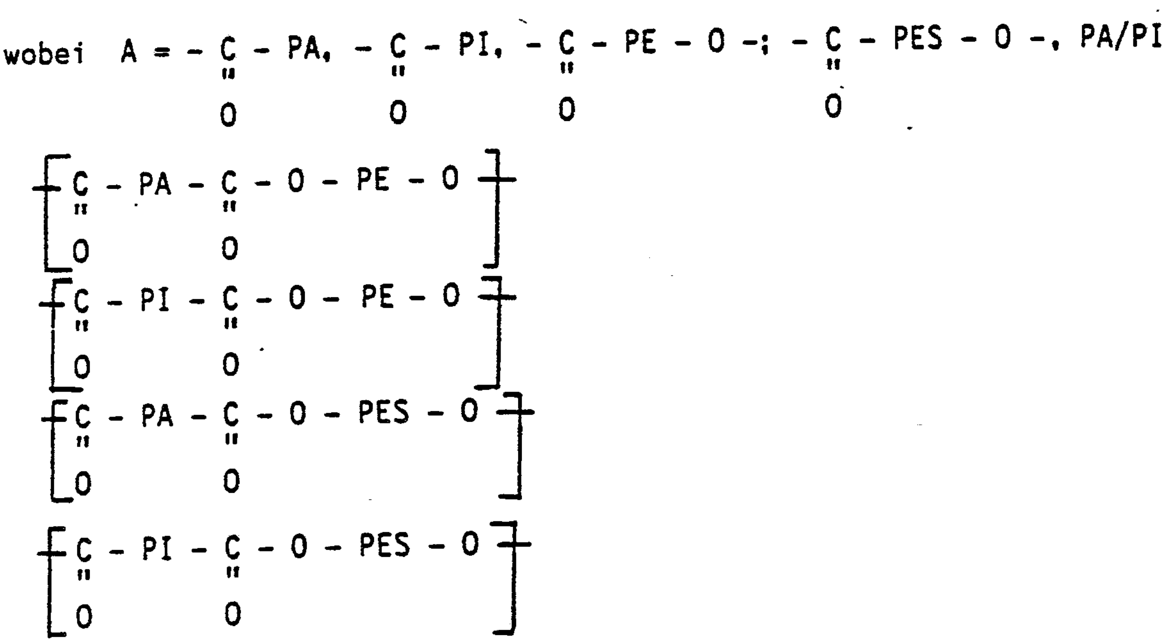

B = PA, PI, PE, PES und/oder ein Blocksegment aus A darstellt, n = eine ganze Zahl von 0 bis 50,m = eine ganze Zahl von 0 bis 50 ist, das Verhältnis zwischen PA und/oder PI zu PE und/oder PES in den Blocksegmenten zwischen 1 : 10 und 10 : 1 und das Verhältnis A : B zwischen 1 : 20 und 20 : 1, dabei PA = Polyamid/Copolyamid-, PI = Polyimid-, PE = Polyether-und PES = Polyester/Copolyesterblöcke bedeuten,

und

b) gegebenenfalls weiteren bekannten Zusätzen einsetzt.

16. Verfahren zum Verkleben einer Lasche mit Packmittel, insbesondere Behälter, nach Anspruch 15, dadurch **gekennzeichnet**, daß der aufgeschmolzene Klebstoff auf einer Fügeteiloberfläche aufgetragen wird und dann die Fügeteile zusammengebracht und angepreßt werden.

17. Verfahren nach Anspruch 16, dadurch **gekennzeichnet**, daß die Fügeteiloberflächen auf ≥ +50 °C vorgewärmt werden.

18. Verfahren zum Verkleben einer Lasche mit einem Packmittel nach einem der Ansprüche 15 bis 17, dadurch **gekennzeichnet**, daß die Fügeteiloberflächen bzw. die Anpreßstempel auf unterschiedliche Temperaturen vorgewärmt werden und die Temperaturdifferenzen ≥ 20 °C, vorzugsweise ≥ 50°C betragen.

19. Verfahren nach einem der Ansprüche 16 oder 17, dadurch **gekennzeichnet**, daß eine der Fügeteiloberflächen mit einem vorgefertigten Klebfilm aus dem Schmelzklebstoff vor der Verklebung ausgerüstet wird.

20. Verfahren zum Reaktivieren des Schmelzklebfilms nach einem der Ansprüche 15 bis 19, dadurch **gekennzeichnet**, daß die Reaktivierung mittels Wärme, Hochfrequenz, Infrarot und/oder Laserstrahlen erfolgt.

EPAA-36053.2

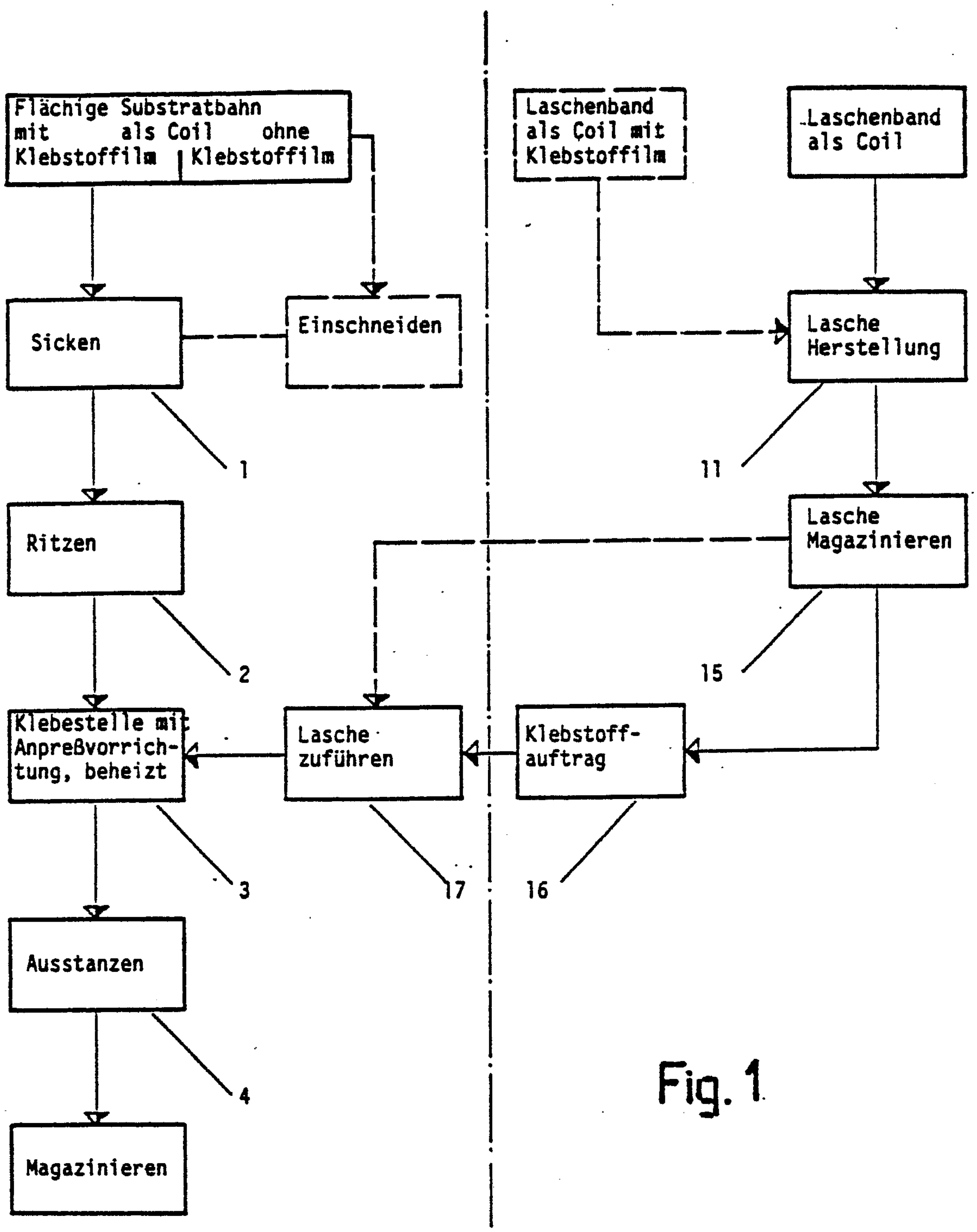


Fig. 1